# FASCICULE DE BREVET EUROPEEN

(11) **EP 0 508 534 B1**
(45) Date de publication et mention de la délivrance du brevet: **20.03.1996**
(21) Numéro de dépôt: 92200954.3
(22) Date de dépôt: 03.04.1992
(51) Int. Cl.: H04N 5/16

(54) **Appareil pour la réception de télévision muni d'un dispositif amélioré de restitution de la composante continue**
Fernsehempfangsanordnung mit einer verbesserten Gleichstrompegelauswertungsvorrichtung
Television receiving device comprising an improved direct current component restoration device

(30) Priorité: 12.04.1991 FR 9104490
(43) Date de publication de la demande: 14.10.1992
(73) Titulaire: PHILIPS ELECTRONIQUE GRAND PUBLIC, F-92150 Suresnes (FR); Philips Electronics N.V., NL-5621 BA Eindhoven (NL)
(72) Inventeur: Potier, Loic, F-75008 Paris (FR); Rakhodai, Issa, F-75008 Paris (FR)
(74) Mandataire: Caron, Jean

(56) Documents cités:
- EP-A- 0 348 322
- EP-A- 0 368 417
- US-A- 4 707 730

## Description

La présente invention concerne un appareil pour la restitution de la composante continue dans un dispositif de réception de télévision, destiné à recevoir un signal d'entrée véhiculant des informations qui comprennent notamment des périodes de signal numérique codé, muni
- d'un convertisseur analogique numérique,
- d'un ensemble de traitement numérique de signal,
- d'un dispositif de génération d'un signal de correction de la composante continue, comportant un décodeur de données numériques et un circuit arithmétique de calcul d'un signal d'erreur basé sur la différence entre la valeur du signal appliqué à l'entrée du dispositif et la valeur du signal décodé, et
- d'un circuit d'application de la correction de la composante continue pour appliquer au signal d'entrée un signal de correction, et fournir un signal corrigé sur sa sortie,
le montage en cascade du circuit d'application de la correction et du du convertisseur analogique numérique étant relié à l'entrée de l'ensemble de traitement de signal dont la sortie est reliée à l'entrée du dispositif de génération d'un signal de correction, dont la sortie est rebouclée sur une entrée de signal de correction du circuit d'application de la correction.

Un tel appareil est par exemple un téléviseur équipé pour la réception d'un signal en HDMAC ou en D2-MAC/paquet, ou bien un "tuner satellite" ou même n'importe quel appareil muni d'un organe effectuant un traitement de signal dans un système de transmission.

Un appareil selon le préambule ci-dessus est connu de la demande de brevet EP-A-0 348 322 (ETAT FRANCAIS). Selon ce document, l'estimation de la composante continue est faite sur une pluralité d'échantillons pendant la durée de la partie numérique du signal, et il y a un circuit pour faire la somme de ces échantillons, un circuit pour compter le nombre des échantillons, et un circuit pour diviser la dite somme par ce nombre de façon à fournir une moyenne. Tous ces circuits occupent une surface de silicium non négligeable dans un circuit intégré.

L'invention se propose de simplifier le dispositif sans diminuer ses performances.

A cet effet le dispositif de génération d'un signal de correction de la composante continue selon l'invention est muni de moyens pour accumuler indéfiniment les valeurs des signaux d'erreur successifs issus du circuit arithmétique de calcul d'un signal d'erreur, une fraction fixe de la valeur du signal établi par ces moyens étant fournie directement au circuit d'application de la correction.

Ainsi l'invention est basée sur la constatation qu'avec un système récursif, les performances du dispositif ne sont pas diminuées lorsque l'estimation de l'erreur est approximative, en d'autres termes on a constaté qu'il n'était pas nécessaire de connaître le nombre exact des échantillons qui ont été pris en compte, ce qui permet l'économie d'au moins deux des circuits présents dans l'art antérieur : le circuit pour compter le nombre des échantillons, et le circuit pour diviser la dite somme par ce nombre.

Dans une forme de réalisation, les dits moyens pour accumuler indéfiniment les signaux d'erreur successifs sont faits d'un additionneur qui suit le circuit arithmétique de calcul d'un signal d'erreur et qui accumule indéfiniment les valeurs présentées à son entrée.

Dans une autre forme de réalisation, les dits moyens pour accumuler indéfiniment les signaux d'erreur successifs sont faits d'un premier additionneur qui suit le circuit arithmétique de calcul d'un signal d'erreur, qui est remis à zéro périodiquement, et qui est suivi par un circuit à rebouclage avec une boucle qui comprend un élément de retard apportant un retard d'une ligne de balayage et qui ramène le signal retardé à l'entrée d'un deuxième additionneur dans lequel ce signal retardé est additionné au signal entrant.

Selon une variante, les dits moyens pour accumuler indéfiniment les signaux d'erreur sont constitués par un condensateur en série dans la connexion transportant le signal à corriger, avec un additionneur qui suit le circuit arithmétique de calcul d'un signal d'erreur, qui est remis à zéro périodiquement et dont une fraction fixe du signal de sortie est amené directement à un convertisseur numérique analogique dont le signal de sortie est amené via une résistance à l'armature aval du condensateur.

Lorsque le circuit d'application de la correction est de type analogique et est monté en amont du convertisseur analogique numérique, la valeur du signal de correction est fournie avantageusement au circuit d'application de la correction via un convertisseur numérique analogique, auquel est amenée directement une fraction fixe de la valeur du signal établi par les dits moyens pour accumuler indéfiniment les signaux d'erreur successifs.

Lorsque le circuit d'application de la correction est de type numérique, c'est-à-dire que le circuit d'application de la correction est un additionneur numérique qui est monté en amont du circuit d'application de la correction, le signal de correction à additionner au signal d'entrée est amené directement au circuit d'application de la correction sous forme numérique depuis la sortie des dits moyens pour accumuler indéfiniment les signaux d'erreur successifs, sous forme d'une fraction fixe de la valeur du signal établi par les dits moyens.

La description qui va suivre, en regard des dessins annexés décrivant des exemples non limitatifs fera bien comprendre comment l'invention peut être réalisée.

La figure 1 représente un mode de réalisation d'un ensemble de traitement de signal comportant un dispositif d'alignement de niveau de signal selon l'invention.

La figure 2 représente plus en détail une partie d'un dispositif d'alignement du niveau selon l'invention.

La figure 3 représente un second mode de réalisation d'un ensemble de traitement de signal comportant un dispositif d'alignement de niveau de signal selon l'invention.

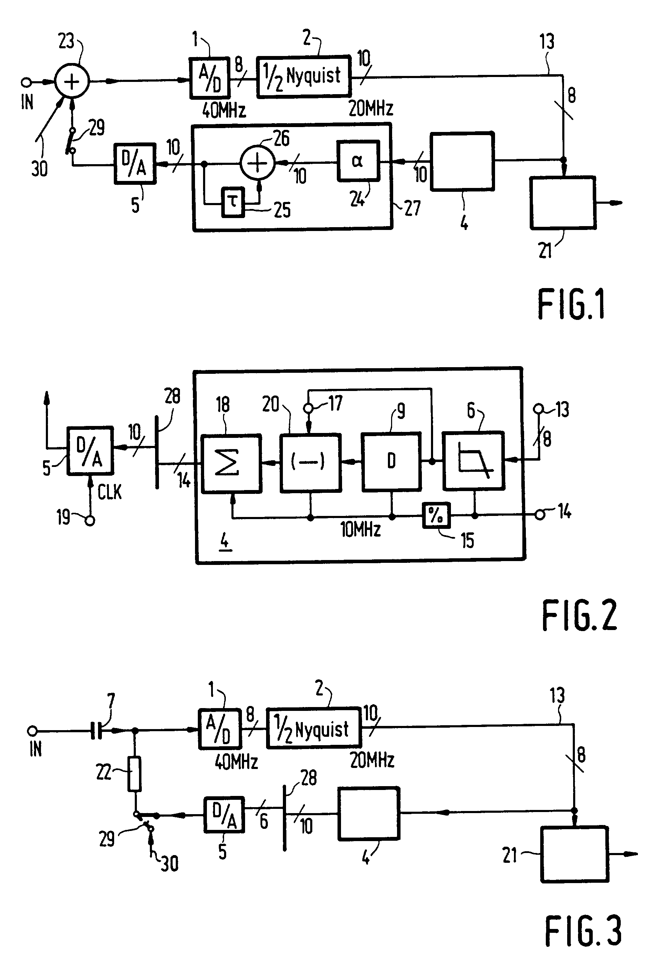

Sur la figure 1, un signal d'entrée analogique représentant un contenu d'image est amené à une entrée IN. A partir de l'entrée IN, le signal est appliqué à une entrée d'un circuit analogique d'application de la correction 23 qui applique au signal d'entrée un signal de correction du niveau de tension continue. Ce circuit 23 est un additionneur ou un soustracteur, selon la polarité des opérandes qui lui sont fournis. Le signal est ensuite converti en valeurs numériques dans un convertisseur analogique numérique 1, qui fournit un signal fait de mots ou échantillons de huit bits à une fréquence d'horloge de 40,5 MHz pour HDMAC ou de 20,25 MHz pour D-MAC ou D2-MAC. Ensuite, le signal est filtré dans un filtre numérique 2. Dans le système D2-HDMAC par exemple, un filtrage est opéré selon une courbe amplitude-fréquence obéissant aux "critères de Nyquist", filtrage partagé entre l'émetteur et le récepteur, et le filtre 2 est alors un filtre "½ Nyquist". Le signal sortant du filtre avec par exemple dix bits est délivré sur une connexion 13, pour être fourni à d'autres éléments 21 de l'appareil qui ne font pas partie de l'invention.

A la connexion 13 est relié un ensemble de correction de la composante continue, c'est-à-dire d'alignement du niveau de tension continue du signal, qui comporte un dispositif 4 d'estimation du niveau continu du signal numérique présent sur la connexion 13, dispositif qui calcule un signal de correction. Selon une variante de réalisation non obligée, l'élément 4 est suivi sur la figure 1 par un module 27 qui sera décrit plus loin. Le signal est amené enfin à un convertisseur numérique analogique 5 qui convertit le signal d'erreur numérique en un signal analogique, lequel est fourni à une deuxième entrée du circuit d'application de la correction 23, pour être ajouté au signal entrant.

La mesure de la correction à apporter est faite dans l'élément 4 sur un signal qui a été corrigé dans le circuit 23. Un tel dispositif dit "récursif" travaille donc sur un principe différent de ceux où la mesure du signal pour correction est faite sur un signal prélevé avant l'application de la correction. Dans le présent dispositif, il est possible d'assurer l'annulation de l'erreur lorsqu'il n'y a qu'un accumulateur ou intégrateur dans la boucle de réglage de la composante continue. On comprendra plus loin l'intérêt de cette remarque.

Un dispositif d'estimation 4 est représenté plus en détail sur la figure 2, suivi d'un élément de liaison 28 et du convertisseur numérique analogique 5. Il comporte un décodeur de données numériques 6-9, un circuit arithmétique 20, et un additionneur 18. Le décodage y est réalisé classiquement au moyen d'un filtre passe-bas 6, dont la fréquence de coupure est de 5 MHz dans le cas d'un standard D2-MAC, et qui est suivi d'un décodeur proprement dit 9, un décodeur à seuil ou éventuellement un décodeur de Viterbi. Ce décodeur peut d'ailleurs être le décodeur unique de l'appareil, qui fournit le signal décodé pour tous les usages prévus, au lieu d'être seulement un décodeur spécifique du dispositif d'estimation de niveau. Le signal numérique décodé est fourni à un circuit arithmétique 20, à une autre entrée 17 duquel est amené le signal dont il s'agit d'estimer la composante continue : ce signal est prélevé à la sortie du filtre 6 du dispositif d'estimation lui même, avant le décodeur 9. Dans sa forme la plus simple le circuit arithmétique 20 est un circuit qui calcule la différence entre le signal à son entrée 17, imparfaitement corrigé après passage dans le circuit 23, et la valeur idéale correspondant au signal décodé, issu du décodeur 9. La différence peut être calculée seulement pour les zéros, comme l'enseigne le document cité EP-A-0 348 322, ou bien aussi pour toutes les valeurs logiques significatives, ce qui donne alors un plus grand nombre de valeurs. Un tel moyen de mesure est enseigné par exemple par le document EP-A-0 368 417 dont le dispositif n'est pas de type récursif mais dont le circuit de mesure instantané de la grandeur de l'erreur pourrait néanmoins être utilisé ici. Chaque fois que la différence est formée, elle est fournie à l'additionneur 18 qui joue le rôle d'accumulateur et qui travaille sur au moins quatorze bits dans le cas où l'on n'utilise pas le module 27 de la figure 1. Cet additionneur accumule indéfiniment les résultats successifs issus du circuit arithmétique 20.

Des impulsions d'horloge sont fournies à 20,25 MHz (dans le cas d'un signal D2-MAC) sur une entrée 14 pour donner le rythme au filtre numérique 6. La fréquence de cette horloge est divisée par deux dans un diviseur 15, ce qui l'amène à 10,125 MHz, et donne alors le rythme au décodeur 9, au circuit arithmétique 20 et à l'additionneur 18. Ainsi la sortie du filtre 6 est échantillonnée à la fréquence 10,125 MHz, ce qui permet de sélectionner seulement les échantillons significatifs dans le signal D2-MAC en négligeant les transitions du diagramme de l'oeil.

Le signal de sortie de l'accumulateur, qui est ici l'additionneur 18, est amené à un élément de liaison 28, avec au moins douze bits (quatorze dans le présent exemple). Sur ces quatorze bits, l'élément 18 enlève un certain nombre de bits de plus petit poids. Ceci est nécessaire pour éviter que la correction soit plus grande que l'erreur, ce qui ferait entrer le dispositif en oscillations. Par exemple, seuls les dix bits de plus grand poids sont transmis par l'élément de liaison 28 au convertisseur numérique analogique 5 pour être convertis en une valeur analogique qui est enfin fournie en tant que signal de correction au circuit 23 d'application de la correction. Il est bon de pouvoir régler le nombre de bits extraits du signal de sortie de l'additionneur 18 en fonction du type de modulation (AM, FM, bande de base) ou du taux d'erreur sur un site donné. C'est pourquoi l'élément de liaison 28 est en pratique constitué par un registre dans lequel on peut commander à volonté la position des bits qui y sont lus pour être fournis au convertisseur numérique analogique 5, ce qui permet en outre de régler à volonté la vitesse de la correction. Le convertisseur numérique analogique 5 est commandé par une impulsion d'horloge appliquée à une entrée 19, qui déclenche les conversions par exemple à fréquence de ligne (15625 Hz dans le cas du D2-MAC).

Un exemple numérique permettra de mieux comprendre le fonctionnement du montage de la figure 2. Supposons que le signal à l'entrée IN soit un signal D2-MAC et tienne dans une plage de tension de 0 à 1 volts, la tension 0,5 volt représentant donc un zéro. Le convertisseur analogique numérique 1 travaillant sur huit bits, soit en notation décimale dans une plage allant de "0" à "255", un signal "128" représente un zéro. Supposons encore que les défauts de la chaîne de transmission soient susceptibles d'apporter un décalage de tension continue atteignant ± 0,4 volts. Le convertisseur analogique numérique 5 travaille sur dix bits et doit fournir une correction maximale de ± 0,4 volts, donc une variation d'un, bit à l'entrée est converti en une variation de 0,781 mV (1/1024^{e} de 0,8 volts). Lorsque le décodeur 9 (qui travaille sur huit bits) reconnaît un zéro logique, il délivre la valeur valant 128 en décimal ; si à ce moment le signal filtré, sur la connexion 17 vaut par exemple 150 (soit 0,586 volts au lieu de 0,5 volts), la différence de 150 - 128 = 22 est fournie par le soustracteur 20 pour être accumulée dans l'additionneur 18. Bien qu'il ne soit pas possible de savoir exactement conbien de zéros seront rencontrés au cours d'une période de signal duobinaire (cela dépend du contenu du signal), on peut tabler sur un nombre moyen de zéros rencontrés de l'ordre de cinquante. Après une première ligne de l'image, le total accumulé sera donc d'à peu près cinquante fois 22 bits, soit 1100 bits. Cette valeur s'écrit en binaire sur quatorze bits 00010001001100. Par suite du branchement décalé du bus d'entrée (10 bits) du convertisseur numérique analogique 5 par rapport au bus de sortie de l'additionneur 18 (14 bits), quatre bits sont négligés et le signal présenté à l'entrée du convertisseur numérique analogique 5 est 1000100, soit 68 en décimal. Cette valeur est convertie en 68 fois 0,781 mV soit 53,13 mV, qui sont soutraits aux 0,586 volts, qui deviennent 0,5329 volts, soit "136" à la sortie du convertisseur analogique numérique 1. Maintenant le soustracteur 20 fournit, pour chacun des environ cinquante zéros logiques suivants, une différence de 8 qui donne donc environ cinquante fois 8 soit 400 bits ajoutés aux 1100 précédents, donnant une valeur "accumulée" de 1500, soit 00010111011100 en binaire et 0001011101 après suppression des quatre bits de droite, soit 93 en décimal. Cette valeur est convertie en 93 fois 0,781 mV soit 72,7 mV, qui sont soutraits aux 0,586 volts à l'entrée IN, qui deviennent 0,513 volts à l'entrée du convertisseur analogique numérique 1, soit "131" à sa sortie. Bien entendu ceci continue à chaque période de signal duobinaire, jusqu'à ce que la correction complète soit obtenue, c'est-à-dire qu'on a "128" (pour un zéro logique) à la sortie du convertisseur analogique numérique 1. Alors aucun bit ne vient plus s'ajouter dans l'accumulateur, mais aucun non plus ne vient se soustraire, et il garde la valeur qui donne la bonne correction, jusqu'à un moment ultérieur où, l'erreur sur le niveau de tension continue s'étant modifiée, la correction va de nouveau s'adapter automatiquement de la manière décrite ci-dessus.

Il va de soi que si l'on utilise tous les éléments binaires significatifs de la période duobinaire, et pas seulement les zéros, le nombre d'échantillons est différent : l'homme du métier peut alors facilement modifier certaines des valeurs numériques indiquées.

Le dispositif représenté sur la figure 3 est très semblable à celui représenté sur la figure 1 à ceci près que, à partir de l'entrée IN, le signal traverse un condensateur 7, puis il est appliqué au convertisseur analogique numérique 1 et la suite des éléments jusqu'à la sortie 13 est identique à celle du dispositif de la figure 1. La connexion 13, comme dans le montage de la figure 2, est reliée à un ensemble de correction de la composante continue, qui comporte un élément 4 analogue à celui de la fig 2, fournissant un signal de correction. L'élément 4 est suivi par un élément de liaison 28 du même genre que celui de la figure 2 et par un convertisseur numérique analogique 5, le signal analogique de sortie de ce convertisseur étant appliqué via une résistance 22 à l'armature aval du condensateur 7. La capacité 7 agit de telle façon que lorsqu'une charge y est introduite via la résistance 22, cette charge reste acquise et la capacité agit donc elle même en accumulateur. Comme cela a été indiqué plus haut, il ne faut qu'un accumulateur dans la boucle, et donc l'additionneur 18 de l'élément 4 est ici remis à zéro par exemple au début de chaque ligne d'image, afin de ne pas jouer un rôle d'accumulateur. Ainsi le condensateur sert de mémoire pour la tension de correction. De ce fait le signal de sortie de l'élément 4 peut comporter moins de bits, par exemple dix bits, c'est-à-dire que la capacité de l'additionneur 18 du montage de la figure 2 peut être plus petite, et l'élément de liaison 28 ne transmet au convertisseur numérique analogique que les bits de plus fort poids du signal de sortie de l'élément 4, par exemple six bits. En quelque sorte, il y a transfert de capacité de mémoire vers le condensateur 7. La constante de temps du montage résistance 22 + condensateur 7 est choisie de l'ordre de quinze fois la durée d'une ligne d'image.

Sur la figure 1 le module 4 est suivi d'un module référencé 27. Le module 4 est analogue à celui de la figure 2, mais son additionneur est remis à zéro à chaque début de ligne et sa capacité est plus petite, c'est-à-dire qu'il délivre moins de bits. Le module 27 comporte une boucle interne à l'élément 27, qui comprend un élément de retard 25 apportant un retard d'une ligne de balayage d'image et qui ramène le signal retardé à l'entrée d'un deuxième additionneur 26 dans lequel ce signal retardé est additionné au signal entrant : ainsi l'additionneur 26 joue le rôle d'un intégrateur en accumulant le signal d'une ligne sur l'autre. C'est parce que le module 27 agit en intégrateur que l'additionneur 18 est remis à zéro par exemple à chaque ligne de balayage d'image pour qu'il n'y ait qu'un intégrateur dans la boucle de réglage de la composante continue. C'est aussi parce qu'il est remis périodiquement à zéro que la capacité de cet additionneur 18 peut être prévue plus petite, par exemple de dix bits. Le module 4 peut être suivi d'un élément multiplieur 24 optionnel qui multiplie par un coefficient alpha plus petit que un. Le signal de sortie de l'additionneur 26 est fourni au convertisseur numérique analogique 5. Ce montage est un peu plus compliqué que celui de la figure 2, mais les capacités des additionneurs sont plus faibles et un tel montage serait peut-être intéressant du point de vue de l'implantation sur un circuit intégré.

Actuellement le montage préféré est celui de la figure 2, inséré dans celui de la figure 3 tel que décrit plus haut. Néanmoins, le schéma selon la figure 1 peut aussi être utilisé dans le dispositif de la figure 3, et réciproquement le schéma de la figure 2 peut aussi être utilisé dans le dispositif de la figure 1.

Ainsi donc plusieurs variantes sont possibles en ce qui concerne la réalisation des moyens pour accumuler indéfiniment les valeurs des signaux d'erreur successifs issus du circuit arithmétique de calcul d'un signal d'erreur : dans la figure 2, ces moyens sont constitués par l'additionneur 18, jamais remis à zéro, dans la figure 1, ces moyens sont constitués par la boucle interne à l'élément 27 en association avec un module 4 dont l'additionneur 18 est remis à zéro à chaque ligne, et dans la figure 3, ces moyens sont constitués par le condensateur 7 en association avec un module 4 dont l'additionneur 18 est également remis à zéro à chaque ligne.

On pourrait aussi réaliser le circuit de la figure 1 en utilisant pour le circuit d'application de la correction un additionneur de type numérique qui pourrait alors être placé après le convertisseur analogique numérique 1 ou après le filtre 2. L'avantage serait que le signal de sortie de l'additionneur pourrait lui être fourni directement ou via un circuit de suppression des bits de poids faible, et en tous cas sans le convertisseur numérique analogique 5. Néanmoins dans ce cas il faudrait un convertisseur analogique numérique 1 de grande capacité (avec beaucoup de bits) car il devrait pouvoir traiter des signaux décalés du point de vue du niveau de tension continue et aussi parce que chaque bit de la correction de niveau doit représenter un pas de variation suffisamment faible pour être invisible sur l'image. Un tel convertisseur est cher aujourd'hui mais, si un éventuel progrès permettait d'obtenir à un prix acceptable un convertisseur travaillant avec un nombre de bits plus grand qu'aujourd'hui, cette solution pourrait alors être envisagée. Le nombre de bits suffisant, qui est toujours nécessaire pour permettre l'application suffisamment fine de la correction est fourni, dans les montages décrits plus haut, par le convertisseur numérique analogique 5, mais celui-ci est très bon marché car il fonctionne à fréquence de ligne d'image et non pas à 40,5 MHz.

Un problème se pose à la mise en route de l'appareil : à ce moment le décodeur n'est pas encore "accroché", c'est-à-dire que la synchronisation correcte du décodeur sur le signal d'entrée n'est pas encore obtenue. Alors le dispositif d'estimation ne peut remplir son office et doit être déconnecté. Il est possible par exemple de passer par une ou plusieurs phases transitoires dans lesquelles des modes différents de réglage de la composante continue sont utilisés (pour la description d'un tel processus, on peut se reporter à la demande de brevet FR-A-2 610 773, intitulée : "Système de synchronisation sur un signal semi-numérique").

A cet effet est prévu un interrupteur 29 qui permet de débrancher la sortie du convertisseur numérique analogique 5 et d'appliquer à la résistance 22 (fig 3) ou au circuit d'application de la correction 23 (fig 1), dans une première phase dite "d'accrochage", un signal de réglage 30 d'une autre provenance, et ensuite de passer à la phase "normale" en utilisant le signal issu du convertisseur numérique analogique 5. Dans le cas du montage de la figure 3, l'élément 29 est un commutateur qui applique à la résistance 22, soit le signal issu du convertisseur numérique analogique 5, soit le signal 30. La constante de temps du montage résistance 22 - condensateur 7 assure une transition douce entre les phases successives différentes, au moment du basculement de l'inverseur 29. Dans le cas du montage de la figure 1, l'élément 29 est un simple interrupteur qui coupe la connection venant du convertisseur numérique analogique 5. Le signal 30 est amené directement à l'élément d'application de la correction 23 qui ajoute au signal entrant à la fois le signal issu du convertisseur numérique analogique 5 (lorsque l'interrupteur 29 est fermé) et le signal 30. Des moyens connus de l'homme du métier doivent être prévus par ailleurs pour annuler progressivement le signal 30 après le passage de la phase d'accrochage à la phase normale, c'est-à-dire après la fermeture de l'interrupteur 29.

## Revendications

1. Appareil pour la restitution de la composante continue dans un dispositif de réception de télévision, destiné à recevoir un signal d'entrée (IN) véhiculant des informations qui comprennent notamment des périodes de signal numérique codé, muni
- d'un convertisseur analogique numérique (1),
- d'un ensemble de traitement numérique de signal (2),
- d'un dispositif de génération d'un signal de correction de la composante continue, comportant un décodeur de données numériques (9) et un circuit arithmétique de calcul d'un signal d'erreur (20) basé sur la différence entre la valeur du signal appliqué à l'entrée (13) du dispositif et la valeur du signal décodé, et
- d'un circuit d'application de la correction de la composante continue (23 ou 7+22) pour appliquer au signal d'entrée un signal de correction, et fournir un signal corrigé sur sa sortie,
le montage en cascade du circuit d'application de la correction (23 ou 7+22) et du du convertisseur analogique numérique (1) étant relié à l'entrée de l'ensemble de traitement de signal (2) dont la sortie est reliée à l'entrée du dispositif de génération d'un signal de correction, dont la sortie est rebouclée sur une entrée de signal de correction du circuit d'application de la correction,
caractérisé en ce que le dispositif de génération d'un signal de correction de la composante continue est muni de moyens pour accumuler indéfiniment les valeurs des signaux d'erreur successifs issus du circuit arithmétique de calcul d'un signal d'erreur (20), une fraction fixe de la valeur du signal établi par ces moyens étant fournie directement au circuit d'application de la correction (23).

2. Appareil selon la revendication 1, caractérisé en ce que les dits moyens pour accumuler indéfiniment les signaux d'erreur successifs sont faits d'un additionneur (18) qui suit le circuit arithmétique de calcul d'un signal d'erreur (20) et qui accumule indéfiniment les valeurs présentées à son entrée.

3. Appareil selon la revendication 1, caractérisé en ce que les moyens pour accumuler indéfiniment les signaux d'erreur successifs sont faits d'un premier additionneur (18) qui suit le circuit arithmétique de calcul d'un signal d'erreur (20), qui est remis à zéro périodiquement, et qui est suivi par un circuit à rebouclage (27) avec une boucle qui comprend un élément de retard (25) apportant un retard d'une ligne de balayage et qui ramène le signal retardé à l'entrée d'un deuxième additionneur (26) dans lequel ce signal retardé est additionné au signal entrant.

4. Appareil selon l'une quelconque des revendications 1 à 3, caractérisé en ce que, le circuit d'application de la correction (23 ou 7+22) étant de type analogique et étant monté en amont du convertisseur analogique numérique (1), la valeur du signal de correction est fournie au circuit d'application de la correction via un convertisseur numérique analogique (5), auquel est amenée directement une fraction fixe de la valeur du signal établi par les dits moyens pour accumuler indéfiniment les signaux d'erreur successifs.

5. Appareil selon l'une quelconque des revendications 1 à 3, caractérisé en ce que, le circuit d'application de la correction étant lui même un additionneur numérique et le convertisseur analogique numérique étant monté en amont du circuit d'application de la correction, le signal de correction à additionner au signal d'entrée est amené directement au circuit d'application de la correction sous forme numérique depuis la sortie des dits moyens pour accumuler indéfiniment les signaux d'erreur successifs, sous forme d'une fraction fixe de la valeur du signal établi par les dits moyens.

6. Appareil selon la revendication 1, caractérisé en ce que les dits moyens pour accumuler indéfiniment les signaux d'erreur sont constitués par un condensateur en série dans la connexion transportant le signal (IN) à corriger, avec un additionneur (18) qui suit le circuit arithmétique de calcul d'un signal d'erreur (20), qui est remis à zéro périodiquement, et dont une fraction fixe du signal de sortie est amené directement à un convertisseur numérique analogique (5) dont le signal de sortie est amené via une résistance (22) à l'armature aval du condensateur.

## Patentansprüche

1. Eine Anordnung zur Auswertung des Gleichstrompegels in einer Vorrichtung für den Fernsehempfang, dafür vorgesehen, ein Eingangssignal (IN) zu empfangen, das insbesondere codierte numerische Signalzeiträume enthaltende Informationen überträgt, und mit
- einem analogen numerischen Wandler (1), - einem System zur numerischen Signalverarbeitung (2), - einer Vorrichtung zur Erzeugung eines Korrektursignals des Gleichstrompegels mit einem Decodierer numerischer Daten (9) und einer arithmetischen Fehlersignalberechnungsschaltung (20), die auf dem Unterschied zwischen dem am Eingang der Vorrichtung abgegebenen Signal(13) und dem decodierten Signalwert gründet, und
- einer Korrekturvornahmeschaltung des Gleichstrompegels (23 oder 7 + 22) versehen ist, um dem Eingangssignal ein Korrektursignal zuzuführen und am Ausgang ein korrigiertes Signal zu liefern,
die Kaskadenschaltung der Korrekturvornahmeschaltung (23 oder 7 + 22) und des analogen numerischen Wandlers (1) ist mit dem Eingang des Signalverarbeitungssystems (2) verbunden, dessen Ausgang mit dem Eingang der Vorrichtung zur Erzeugung eines Korrektursignals verbunden ist, deren Ausgang in einer Schleife zu einem Eingang des Korrektursignals der Korrekturvornahmeschaltung rückgeführt wird,
mit dem Merkmal, daß die Vorrichtung zur Erzeugung eines Signals zur Korrektur des Gleichstrompegels mit Mitteln zur unbegrenzten Akkumulation der Werte der aufeinanderfolgenden, aus der arithmetischen Fehlersignalberechnungsschaltung (20) herrührenden Fehlersignale versehen ist, wobei ein fester Anteil des mit diesen Mitteln bestimmten Signalwerts direkt der Korrekturvornahmeschaltung (23) zugeführt wird.

2. Eine Anordnung laut Anspruch 1, mit dem Merkmal, daß die besagten Mittel zur unbegrenzten Akkumulation der aufeinanderfolgenden Fehlersignale aus einem der arithmetischen Fehlersignalberechnungsschaltung (20) folgenden Addierer (18) bestehen, der die in seinem Eingang auftretenden Werte unbegrenzt akkumuliert.

3. Eine Anordnung laut Anspruch 1, mit dem Merkmal, daß die Mittel zur unbegrenzten Akkumulation der aufeinanderfolgenden Fehlersignale aus einem der arithmetischen Fehlersignalberechnungsschaltung (20) folgenden ersten Addierer (18) bestehen, der regelmäßig auf Null rückgestellt wird und von einer Rückführschaltung (27) mit einer Schleife gefolgt wird, die ein Verzögerungselement (25) enthält, das eine Verzögerung einer Bildabtastzeile bewirkt und das verzögerte Signal zum Eingang eines zweiten Addierers (26) zurückbringt, in dem das verzögerte Signal zum Eingangssignal addiert wird.

4. Eine Anordnung laut einem der Ansprüche 1 bis 3, mit dem Merkmal, daß die Korrekturvornahmeschaltung (23 oder 7 + 22) analogen Typs ist und vor dem Eingangspol des numerischen analogen Wandler (1) angebracht ist, wobei der Wert des Korrektursignals der Korrekturvornahmeschaltung über einen analogen numerischen Wandler (5) zugeführt wird, dem direkt ein fester Anteil des mit den besagten Mitteln zur unbegrenzten Akkumulation der aufeinanderfolgenden Fehlersignale bestimmten Signalwerts zugefügt wird.

5. Eine Anordnung laut einem beliebigen Anspruch 1 bis 3, mit dem Merkmal, daß die Korrekturvornahmeschaltung selbst ein numerischer Addierer ist und der numerische analoge Wandler vor dem Eingangspol der Korrekturvornahmeschaltung angebracht ist, wobei das zum Eingangssignal zu addierende Korrektursignal direkt in numerischer Form vom Ausgang der besagten Mittel zur unbegrenzten Akkumulation der aufeinanderfolgenden Fehlersignale zur Korrekturvornahmeschaltung geleitet wird, in der Form eines festen Anteils des durch diese Mittel bestimmten Signalwerts.

6. Eine Anordnung laut Anspruch 1, mit dem Merkmal, daß die besagten Mittel zur unbegrenzten Akkumulation der Fehlersignale aus einem Kondensator in Serie in der das Korrektursignal (IN) befördernden Verbindung bestehen, mit einem Addierer (18), der der arithmetischen Fehlersignalberechnungsschaltung (20) folgt, die regelmäßig auf Null rückgestellt wird, und von der ein fester Ausgangssignalanteil direkt dem analogen numerischen Wandler (5) zugeführt wird, dessen Ausgangssignal über einen Widerstand (22) der am Ausgangspol liegenden Kondensatorschicht zugeführt wird.

## Claims

1. An apparatus for restoring the direct current component in a television receiving device, intended to receive an input signal (IN) conveying information components which particularly comprise coded digital signal periods, provided with
- an A/D converter (1),
- a digital signal processing assembly (2),
- a device for generating a signal for correcting the DC component, comprising a digital data decoder (9) and a circuit (20) for calculating an error signal based on the difference between the value of the signal applied to the input (13) of the device and the value of the decoded signal, and
- a circuit (23 or 7+22) for applying the correction of the DC component for applying a correction signal to the input signal and for supplying a corrected signal from its output, the cascade arrangement of the circuit (23 or 7+22) for applying the correction and the A/D converter (1) being connected to the input of the signal processing assembly (2) whose output is connected to the input of the device for generating a correction signal whose output is fed back to a correction signal input of the circuit for applying the correction, characterized in that the device for generating a signal for correcting the DC component is provided with means for indefinitely accumulating the values of the successive error signals coming from the circuit (20) for calculating an error signal, a fixed fraction of the value of the signal fixed by said means being directly applied to said circuit (23) for applying the correction.

2. An apparatus as claimed in Claim 1, characterized in that said means for indefinitely accumulating the successive error signals are constituted by an adder (18) which follows the circuit (20) for calculating an error signal and which indefinitely accumulates the values applied to its input.

3. An apparatus as claimed in Claim 1, characterized in that the means for indefinitely accumulating the successive error signals are constituted by a first adder (18) which follows the circuit (20) for calculating an error signal which is periodically reset to zero and is followed by a feedback circuit (27) with a loop which comprises a delay element (25) producing a delay of one scanning line and which applies the delayed signal to the input of a second adder (26) in which this delayed signal is added to the incoming signal.

4. An apparatus as claimed in any one of Claims 1 to 3, characterized in that the circuit (23 or 7+22) for applying the correction is of the analog type and is arranged upstream of the A/D converter (1), the value of the correction signal is supplied to the circuit for applying the correction via a D/A converter (5) to which a fixed fraction of the value of the signal fixed by said means is directly applied for indefinitely accumulating the successive error signals.

5. An apparatus as claimed in any one of Claims 1 to 3, characterized in that the circuit for applying the correction is itself a digital adder and the A/D converter is arranged upstream of the circuit for applying the correction, the correction signal to be added to the input signal is directly applied to the circuit for applying the correction in a digital form from the output of said means for indefinitely accumulating the successive error signals in the form of a fixed fraction of the value of the signal fixed by said means.

6. An apparatus as claimed in Claim 1, characterized in that said means for indefinitely accumulating the error signals are constituted by a capacitor in series in the connection conveying the signal (I) to be corrected, with an adder (18) which follows the circuit (20) for calculating an error signal, which circuit is periodically reset to zero and of which a fixed fraction of the output signal is directly applied to a D/A converter (5) whose output signal is applied to the downstream plate of the capacitor via a resistor (22).
